# EUROPÄISCHE PATENTANMELDUNG

(11) **EP 0 899 498 A2**
(43) Veröffentlichungstag der Anmeldung: **03.03.1999**
(21) Anmeldenummer: 98114268.0
(22) Anmeldetag: 30.07.1998
(51) Int. Cl.: F16L 37/092

(54) **Steckkupplung**

(30) Priorität: 23.08.1997 DE 19736765
(71) Anmelder: Friatec Aktiengesellschaft, 68229 Mannheim (DE)
(72) Erfinder: Sichler, Wolfgang, 68239 Mannheim (DE)
(74) Vertreter: Schmitt, Meinrad, Dipl.-Ing.

(57) **Zusammenfassung**

Eine Steckkupplung für Rohre enthält einen Muffenkörper (2), eine Halteeinrichtung zur Verbindung eines Rohrendes (3, 4) mit dem Muffenkörper sowie einen zwischen der Innenfläche des Muffenkörpers (2) und dem Rohrende (3, 4) angeordneten Dichtring (38). Diese Steckkupplung soll dahingehend weitergebildet werden, daß das Einschieben des Rohrendes (3, 4) erleichtert wird. Es wird vorgeschlagen, daß der Muffenkörper (2) einen Freiraum (30) für den Dichtring (38) aufweist, welcher vor dem Einschieben des Rohrendes (3, 4) in Einschubrichtung (28) vor dem Freiraum (30) angeordnet ist und welcher beim Einschieben des Rohrendes (3, 4) in axialer Richtung in den Freiraum (30) verschoben wird, wobei er derart entspannt, daß sein Innendurchmesser im wesentlichen gleich groß ist wie der Außendurchmesser (40) des Rohrendes (3, 4). Nach dem Einschieben des Rohrendes (3, 4) liegt der Dichtring (38) einerseits an einer Dichtkante (32) und/oder an einer radialen Erweiterung (29) des Muffenkörpers (2) und andererseits an der Außenfläche des Rohrendes (3, 4) dichtend an.

## Beschreibung

Die Erfindung bezieht sich auf eine Steckkupplung für Rohre gemäß den im Oberbegriff des Patentanspruchs 1 angegebenen Merkmalen.

Aus der DE-A-31 12 255 ist eine derartige Kupplung für Rohre bekannt, deren Halteeinrichtung ein axial verschiebbares Rückhalteelement aufweist. Das Rückhalteelement ist als eine axial geschlitzte Hülse ausgebildet und enthält eine radial nach außen gerichtete Rippe sowie am vorderen Ende eine konische Fläche, welche mit einem Konus eines Zwischenelements korrespondiert. Das genannte Rückhalteelement ist teilweise innerhalb eines starren Ringes vorgesehen, welcher eine radial innenliegende, kreisförmige Rippe aufweist. Beim Einschieben eines Rohrendes werden zunächst das Rückhalteelement und der starre Ring in axialer Richtung bewegt, bis dieser am Boden des Muffenkörpers zur Anlage gelangt. Beim weiteren Einschieben des Rohrendes wird die radiale Rippe des Rückhalteelements an der innenliegenden Rippe des Ringes vorbeibewegt, wobei der Einschubwiderstand erhöht wird und das Rückhalteelement radial an die Außenfläche des Rohrendes gepreßt wird. Radial innenliegende Zähne des Rückhalteelements werden hierbei an die Außenfläche des Rohrendes zwecks gegenseitiger Arretierung eingepreßt. Ist das Rückhalteelement weit genug eingeschoben, so gelangt die radial nach außen gerichtete Rippe des Rückhalteelements in eine Ringnut des umgebenden Ringes, wobei der vorgegebene erhöhte Einschubwiderstand gegen die Einschubbewegung plötzlich aufhört. Die Vorgabe und das Abstimmen der Widerstandskraft erfordert einen nicht unerheblichen Fertigungsaufwand mit geringen zulässigen Toleranzen des Rückhalteelements und des genannten Ringes. Auch für den Außendurchmesser des Rohres müssen recht enge Grenzen eingehalten werden, da ansonsten die radial nach innen gerichteten Zähne des Rückhalteelements nur unvollständig in die Außenfläche des Rohrendes gepreßt werden mit der Gefahr, daß das Rohrende wieder aus der Kupplung herausgezogen werden kann.

Ferner ist aus der DE-A-196 25 687 eine Steckkupplung für Rohre bekannt, welche einen Muffenkörper und eine Halteeinrichtung zur Verbindung eines Rohrendes mit einem Muffenkörper aufweist. Im Muffenkörper ist ein vom Rohrende axial verschiebbarer Mitnahmekörper mit einem Anschlagelement angeordnet. In zweckmäßiger Weise ist der axial verschiebbare Mitnahmekörper unabhängig von der Halteeinrichtung ausgebildet, wobei der Mitnahmekörper und/oder das Anschlagelement innerhalb einer Hülse angeordnet sind. Das Anschlagelement ist vorzugsweise als eine radial bewegbare Zunge ausgebildet und schlägt beim Erreichen einer vorgegebenen Einschubtiefe des Rohres an eine zugeordnete Gegenfläche an. Beim Anschlagen entsteht ein Signal, welches als ein Klickgeräusch bezeichnet werden kann und welches vom Monteur problemlos und ohne zusätzliche Hilfsmittel wahrnehmbar ist. Das beim Anschlagen erzeugte Signal kann von dem Monteur als bevorzugt akustisches Signal wahrgenommen werden und/oder als Schwingung oder Vibration mit der Hand wahrgenommen bzw. ertastet werden. Die bewegbare Zunge und die genannte Gegenfläche sind derart aufeinander abgestimmt, daß keine zusätzlichen Verstärkungseinrichtungen für das Signal erforderlich sind. Nach dem Auftreten des Signals kann der Monteur die Einschubbewegung des Rohrendes beenden, denn er weiß mit großer Sicherheit, daß die Verbindung nunmehr ordnungsgemäß hergestellt ist.

Hiervon ausgehend liegt der Erfindung die Aufgabe zugrunde, die Steckkupplung der genannten Art dahingehend weiterzubilden, daß das Einschieben des Rohrendes erleichtert wird. Die Steckkupplung soll eine einfache, funktionsgerechte Handhabung bei der Montage ermöglichen und die Gefahr von Montagefehlern weitestgehend ausschließen. Ferner soll die Steckkupplung soll mit geringem Fertigungsaufwand herstellbar sein und es soll verhindert werden, daß bei der Herstellung der Verbindung funktionswesentliche Teile, wie insbesondere Dichtung, Klemmring oder ähnliches, nicht ordnungsgemäß zum Einsatz gelangen.

Die Lösung dieser Aufgabe erfolgt gemäß den im Patentanspruchs 1 angegebenen Merkmalen.

Die vorgeschlagene Steckkupplung zeichnet sich durch eine funktionsgerechte Konstruktion aus und gewährleistet eine funktionssichere und dauerhafte Verbindung. Der Dichtring ist in die bevorzugt konusförmige Hinterschneidung, vorzugsweise in der Innenfläche des Muffenkörpers, schiebbar und entspannt dort radial derart, daß er praktisch nicht mehr am Rohr anliegt und folglich eine Reduzierung des Einschubwiderstandes eintritt. Hat der Dichtring beim Einschieben des Rohrendes seine Endstellung und/oder einen Freiraum erreicht, so bietet er beim Weiterschieben keinen Widerstand mehr, da sein Innendurchmesser gleich dem Außendurchmesser des Rohrendes ausgebildet ist. Ein Klemmring der Halteeinrichtung wird in einer vorderen Ausgangsposition durch den Dichtring und/oder eine Hülse gehalten, welche bevorzugt als Klickelement ausgebildet ist. Diese Ausgangsposition entspricht dem Anlieferungszustand der Steckkupplung an den Kunden.

Beim Einschieben des Rohres aus Kunststoff, insbesondere aus PE, durch die Öffnung der Haube oder des Befestigungskörpers wird der Klemmring auf den Rohraußendurchmesser aufgeweitet. Durch den hierbei entstehenden Kraftschluß zwischen Klemmring und Rohrende wird beim Weiterschieben der Dichtring, der insbesondere als O-Ring ausgebildet ist, vom Klemmring mitgenommen, wobei ebenso das Klickelement bzw. die Hülse und der Mitnahmekörper in den Muffenkörper eingeschoben werden. Nach einem vorgegebenen Schubweg, der vorzugsweise einige Millimeter beträgt, kommt der Klemmring zum Stehen, wobei ein äußerer Anschlagkörper, der bevorzugt als Flügelelement ausgebildet ist, an der zugeordneten Endfläche oder axialen Stirnfläche des Muffenkörpers abgestützt wird. Der maximale Schubweg bzw. die axiale Bewegung des Klemmringes wird mittels eines Anschlagkörpers des Klemmringes vorgegeben, bevorzugt derart, daß der Dichtring die Hinterschneidung und/oder eine Erweiterung und/oder einen Freiraum zumindest näherungsweise durch das Verschieben des Klemmringes erreicht. Nachfolgend wird das Rohrende vollständig durch den Klemmring geschoben und schiebt nun seinerseits mit seiner Stirnfläche den Dichtring und das Klickelement in ihre Endpositionen. Sobald der Klemmring seine Endstellung eingenommen hat, kann sich der Dichtring beim Weiterschieben des Rohrendes über die konusförmige Hinterschneidung, welche in einem Freiraum für den Dichtring übergeht, auf seinen Urzustand entspannen.

Ist der vorzugsweise als O-Ring ausgebildete Dichtring im Freiraum, so bietet er dem Rohrende beim Weiterschieben keinen Widerstand mehr, da sein Innendurchmesser im wesentlichen gleich groß ist wie der Außendurchmesser des Rohrendes. In der mit dem Freiraum vorgegebenen Endstellung ist der Dichtring zwischen einer Stirnwand der genannten Hülse, insbesondere des Klickelements, und einer Dichtkante im Inneren des Gehäuses festgelegt und/oder eingespannt. Die Dichtkante bewirkt eine leichte, umlaufende Eindellung des Dichtelements. Infolge der genannten Eindellung ist eine sofortige Dichtwirkung, auch bei niederen Drücken von beispielsweise kleiner als 1 bar, sichergestellt. Bei einer Erhöhung des Druckes wird der O-Ring über den Konus in seinen eigentlichen Verpreßzustand zwischen dem Muffenkörper und dem Rohrende gebracht, wobei er an der Stirnfläche des Klemmrings abgestützt ist.

Weiterbildungen und besondere Ausgestaltungen der Erfindung sind in den Ansprüchen und der weiteren Beschreibung angegeben.

Die Erfindung wird nachfolgend anhand des in der Zeichnung dargestellten besonderen Ausführungsbeispiels näher erläutert. Es zeigen:
- Fig. 1: einen Schnitt in einer axialen Schnittebene durch die als Doppelmuffe ausgebildete Steckkupplung,
- Fig. 2: einen Schnitt durch den mit einer Hülse noch verbundenen Mitnahmekörper,
- Fig. 3: eine Ansicht auf die Hülse und den Mitnahmekörper in Blickrichtung III gemäß Fig. 2.

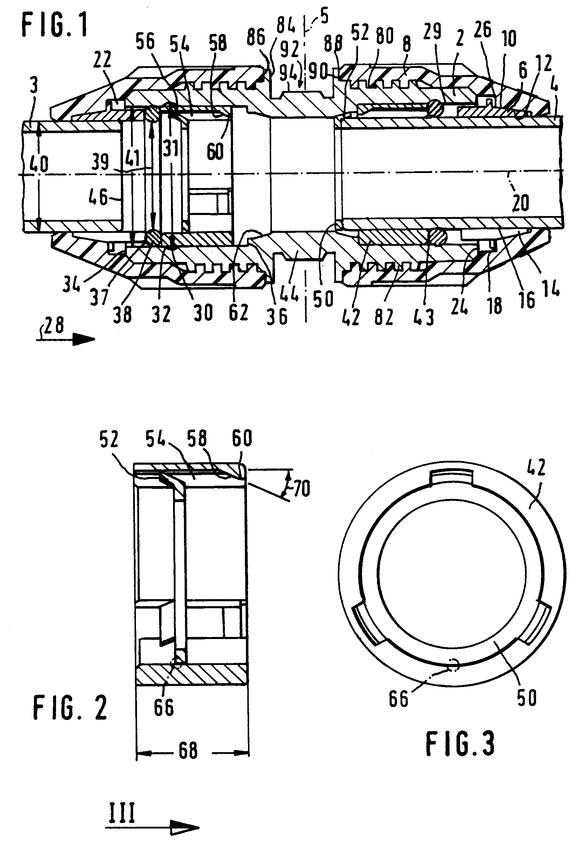

Fig. 1 zeigt in einem axialen Längsschnitt einen Muffenkörper 2, welcher nachfolgend auch als Gehäuse bezeichnet wird und in welchem von beiden Seiten her jeweils ein Rohrende 3, 4 teilweise eingeschoben ist. Die Rohrenden 3, 4 sind Bestandteil von Rohren aus Kunststoff, insbesondere aus Polyäthylen. Die erfindungsgemäße Kupplung mit dem Muffenkörper 2 ist als Doppelmuffe bezüglich einer Mittelebene 5 spiegelsymmetrisch ausgebildet. Im Rahmen der Erfindung kann alternativ die Steckkupplung auch nur für ein einziges Rohrende ausgebildet sein und insbesondere Bestandteil eines Fittings, einer Armatur oder dergleichen sein. Soweit nachfolgend für die in der Zeichnung dargestellte Doppelmuffe der linke oder rechte Teil erläutert werden, gelten die Erläuterungen entsprechend auch für den anderen Teil. Die Einzelkomponenten des linken bzw. rechten Teils der Doppelmuffe sind übereinstimmend ausgebildet und bezüglich der Mittelebene 5 gedreht in die Steckkupplung eingebaut, wo lediglich der Muffenkörper 2 einheitlich für beide Teile ausgebildet ist.

Im Gehäuse oder Muffenkörper 2 ist ein Klemmring 6 vorgesehen, welcher teilweise auch von einem Befestigungskörper oder einer Haube 8 umgeben ist. Der Klemmring besitzt eine konische Außenfläche 10, an welcher eine korrespondierende konische Innenfläche des Befestigungskörpers 8 anliegt. Der Klemmring enthält einen vorzugsweise axialen Schlitz 14 und besitzt auf seiner Innenfläche Klemmzähne 16, welche zum Einkrallen in die Außenfläche der Rohrenden 3 bzw. 4 vorgesehen sind. Der Befestigungskörper ist als eine das freie Ende des Muffenkörpers 2 teilweise übergreifende Haube ausgebildet. Bevor das Rohrende 3 eingeschoben ist, besitzt der Klemmring 6 einen Innendurchmesser, der kleiner ist als der Außendurchmesser des Rohrendes. Beim Einschieben des Rohrendes 3 wird der Klemmring 6 derart aufgeweitet, daß er kraftschlüssig auf dem Rohrende aufsitzt und von diesem in Richtung zur Mittelebene 5 mitgenommen wird. Der Klemmring 6 enthält einen Anschlagkörper 18, welcher beim Einschieben des Rohrendes 3 die axiale Bewegung des Klemmringes 6 begrenzt. Der Anschlagkörper 18 erstreckt sich in radialer Richtung nach außen und ist in zweckmäßiger Weise als eine Anzahl über den Umfang verteilter Flügelelemente ausgebildet. Der Anschlagkörper 18, welcher als Flügelelement in Form eines radialen Stegs, Ringes, Segments oder dergleichen ausgebildet ist, ist in einem Ringraum 22 vorgesehen, dessen axiale Länge auf den zulässigen Bewegungsweg des Klemmringes 6 abgestimmt ist. Dieser Ringraum 22 ist in zweckmäßiger Weise zwischen einer axialen End- oder Stirnfläche 24 des Muffenkörpers 2 sowie einem Bund oder einer Stufe 26 im Inneren des Befestigungskörpers 8 vorgesehen. Der Klemmring 6 mit dem Anschlagkörper 18 kann somit problemlos montiert und eingesetzt werden und besitzt eine vorgegebene axiale Bewegbarkeit bezüglich des Muffenkörpers 2, um die nachfolgend noch zu erläuternden Bewegungen beim Einschieben des Rohrendes 3 in Richtung des Pfeiles 28 durchführen zu können.

Der Muffenkörper 2 besitzt eine Erweiterung 29, welche vorzugsweise konisch ausgebildet ist und sich in Richtung zur Mittelebene 5 öffnet. Die Erweiterung 29 mündet in einen Freiraum 30 mit einem vergrößerten Innendurchmesser 31. Zwischen der Erweiterung 29 und dem Freiraum 30 ist eine ringförmige Dichtkante 32 vorhanden. Durch die derart ausgebildete Hinterschneidung wird ein Einschieben des Rohrendes mit geringem Einschubwiderstand gewährleistet. Ausgehend vom freien Ende 34 des Muffenkörpers 2 zur Mittelebene 5 hin ist zunächst die konische Erweiterung 29 vorgesehen, welche über die Dichtkante 32 in den Freiraum 30 übergeht. Im Muffenkörper 2 ist ein Dichtring 38 angeordnet, welcher als O-Ring ausgebildet ist. Der Dichtring 38 ist ebenso wie das Rohrende 3 in der Position bei Beginn des Einschiebens des Rohrendes dargestellt. Der Dichtring bzw. O-Ring 38 ist in dieser Position radial vorgespannt und verpreßt derart, daß sein Innendurchmesser 39 kleiner ist als der Außendurchmesser 40 des Rohrendes 3. Mittels des Dichtringes 38 wird der Klemmring 6 werksseitig arretiert, so daß er mit seiner konischen Außenfläche 10 an der korrespondierenden Innenfläche 12 des Befestigungskörpers 8 zumindest näherungsweise anliegt. Im Rahmen der Erfindung ist der Innendurchmesser 41 des Muffenkörpers 2 zumindest im Bereich des freien Endes 34 vor der Erweiterung 29 kleiner als der Außendurchmesser des O-Ringes 38 in dessen entspannten Urzustand.

Die Steckkupplung wird werksseitig derart montiert, daß im Anlieferungszustand der Klemmring 6 die im linken Teil der Fig. 1 dargestellte vordere Anfangsstellung einnimmt. Hierbei ist die Haube 8 mit dem Muffenkörper fest verbunden, und zwar zweckmäßig über die nachfolgend noch zu erläuternde Gewindeverbindung. Wie ersichtlich, befindet sich hierbei der Klemmring 6 bzw. dessen Anschlagkörper 18 in der vom freien Ende 34 des Muffenkörpers 2 am weitesten entfernten Position. Der Klemmring 6 wird direkt hinter der Öffnung der Haube 8 in seiner vordersten Stellung gehalten. In der Anfangsposition nimmt gleichfalls der Dichtring seine vorderste Position vor der Erweiterung 29 und dem Freiraum ein. Der Dichtring 38 liegt unter radialer Vorspannung an der Innenfläche des Muffenkörpers an und sichert somit den Klemmring in der Anfangsposition. Anschließend an den Dichtring 38 zum Muffengrund 36 hin ist eine nachfolgend noch zu erläuternde Hülse 42 innerhalb des Muffenkörpers 2 vorgesehen. Zweckmäßig ist zwischen der Hülse 42 und der diese umgebenden Innenfläche des Muffenkörpers 2 eine leichte Verspannung vorgegeben. Diese Vorspannung ist in der Weise vorgegeben, daß sie beim Einschieben des Rohrendes mit niedrigem Kraftaufwand überwunden und die Hülse 42 axial in Einschubrichtung 28 verschoben werden kann. Mittels der derart arretierten Hülse 42 wird folglich über den Dichtring 38 der Klemmring 6 in der vorderen Anfangsposition gehalten. Der Innendurchmesser des Klemmringes 6 ist derart vorgegeben, daß der Klemmring unter Kraftschluß auf der Außenfläche des Rohrendes 3, 4 beim Einschieben aufsitzt und vom Rohrende 3, 4 in Einschubrichtung 28 bewegt wird. Hierbei werden ferner der Dichtring 38 und die Hülse 42 axial verschoben. Der Bewegungsweg des Klemmringes 6 ist mittels des Ringraumes 22 und des darin angeordneten Anschlagkörpers 18 in der Weise vorgegeben, daß bei Erreichen der eingeschobenen Endstellung des Klemmringes 6 der Dichtring 38 zumindest näherungsweise die Erweiterung 29 und/oder den Freiraum 30 erreicht hat. Sobald der Dichtring vollständig in den Freiraum 30 eingeschoben ist und zumindest näherungsweise entspannt ist, hat der Dichtring 38 praktisch keinen Einfluß mehr auf den Einschubwiderstand und das Rohrende kann mit geringem Kraftaufwand leicht vollständig in den Muffenkörper eingeschoben werden.

In axialer Richtung zum Muffengrund 36 liegt an einer axialen Stirnfläche 37 des Klemmring 6 im Inneren des Muffenkörpers 2 der Dichtring 38 an. Weiter folgt die Hülse 42, welche zwischen dem Dichtring 38 und dem Muffengrund 36 angeordnet ist und nachfolgend auch als Klickelement bezeichnet wird. Bei der hier gezeigten Doppelmuffe ist der Muffengrund 36 durch eine axiale Fläche eines Ringes 44 gebildet, welcher im Bereich der Mittelebene 5 angeordnet ist. Es versteht sich, daß bei einteiliger Muffenausbildung die Hülse 42 an einer mit dem Muffengrund 36 vergleichbaren Fläche eines Fittings, einer Armatur oder dergleichen anliegt und ggf. abgestützt ist.

Ausgehend von der links dargestellten Position des Rohrendes 3 wird aufgrund des Kraftschlusses zwischen Rohraußenfläche und Klemmring dieser beim weiteren Einschieben vom Rohrende 3 mitgenommen. Über den an der Stirnfläche 37 des Klemmrings 6 anliegende Dichtring 38 wird ferner auch die Hülse 42 mitgenommen, an dessen axialer Stirnfläche 43 der Dichtring 38 gleichfalls anliegt. Nach wenigen Millimetern Schubweg, welcher mit der axialen Länge des Ringraumes 22 vorgegeben ist, gelangt der Anschlagkörper oder das Flügelelement 18 an der axialen Endfläche 24 des Muffenkörpers 2 zur Anlage und der Klemmring 6 kommt zum Stehen. Das Rohrende 3 wird nun vollständig durch den Klemmring 6 geschoben und schiebt nun seinerseits mit seiner axialen Stirnfläche 46 den Dichtring 38 und die Hülse 42 in ihre Endpositionen. Sobald der Klemmring 3 seine Endstellung aufgrund des Anschlagkörpers 18 erreicht hat, gelangt beim Weiterschieben der Dichtring bzw. O-Ring 38 in die radiale, vorzugsweise konische Erweiterung 29 und kann dabei entspannen, bis er vollständig im Freiraum 30 sich befindet und dort auf seinen Urzustand entspannt ist. Der Innendurchmesser 31 des Freiraumes 30 ist zweckmäßig derart vorgegeben, daß er gleich oder etwas größer ist als der Außendurchmesser des Dichtringes 38 im entspannten Zustand. In diesem entspannten Zustand ist der Innendurchmesser des Dichtringes 38 hingegen gleich oder größer als der Außendurchmesser 40 des Rohrendes 3. Somit bietet der im Freiraum 30 liegende Dichtring 38 dem Rohrende 3 beim Weiterschieben keinen weiteren Widerstand. In dieser Endstellung des Dichtringes im Freiraum ist der Dichtring 38 erfindungsgemäß zwischen der Stirnwand oder Ringfläche 43 und der Dichtkante 32 des Muffenkörpers 2 eingespannt. Die Dichtkante 32 bedingt eine leichte umlaufende Eindellung des Dichtringes bzw. O-Ringes 38, wodurch eine sofortige Dichtwirkung selbst bei vergleichsweise niedrigen Drücken kleiner als 1 bar sichergestellt ist. Wird im fertiggestellten Zustand der Druck erhöht, so wird der O-Ring 38 über die konische Erweiterung 29 in seinen eigentlichen Verpreßzustand zwischen Muffenkörper 2 und Rohr gebracht, wobei er an der Stirnfläche 37 des Klemmrings 6 abgestütz ist.

Beim Weiterschieben des Rohrendes 3 gelangt dessen axiale Stirnfläche 46 an einem Mitnahmekörper 50 zur Anlage, welcher innerhalb der Hülse bzw. des Klickelements 42 angeordnet ist. Der Mitnahmekörper 50 weist wenigstens ein Anschlagelement 52 auf, wobei in zweckmäßiger Weise über den Umfang des Mitnahmekörpers 50 verteilt bevorzugt drei derartige Anschlagelemente vorgesehen sind. Das oder die Anschlagelemente 52 sind vorzugsweise als radial bewegbare und/oder federelastische Zungen ausgebildet. Das Anschlagelement 52 ist in einer axialen Nut oder Ausnehmung 54 der Hülse 42 angeordnet und/oder geführt, ist zur Längsachse 20 geneigt angeordnet und besitzt eine Außenfläche 56. Die Längsnut 54 enthält in Richtung zur Mittelebene 5 eine vorzugsweise geneigt angeordnete Endfläche 58, über welche das Anschlagelement 52 beim Einschieben des Rohrendes 3 zur Anlage gebracht werden kann. Das Klickelement 42 besitzt eine Kante 60, über welche das Anschlagelement 52 hinwegbewegt werden kann. Beim Einschieben des Rohrendes 3 werden der Mitnahmekörper 50 und die Hülse 42 in Richtung des Pfeiles 28 verschoben, bis die Hülse 42 am Muffengrund 36 zur Anlage gelangt. Aufgrund der Federelastizität des Anschlagelements 52 wird dieses radial nach innen gedrückt, bis sein freies Ende über die Kante 60 hinweggeschoben ist und radial nach außen ausweichen kann und an die Gegenfläche 62 im Inneren der Hülse 42 schlägt. Beim Anschlagen des freien Endes des Anschlagelements 52 an diese Gegenfläche 62 entsteht ein Signal, welches als akustisches Signal und/oder als Vibration manuell von einer Bedienungsperson wahrgenommen wird und als Klickgeräusch oder Klopfgeräusch bezeichnet werden kann. Hierdurch ist der Bedienungsperson das vollständige und ordnungsgemäße Einschieben des Rohrendes 3 in die Einsteckkupplung signalisiert. Die Innenfläche der Kante 60 einerseits und der im Vergleich hiermit größere Innendurchmesser der Gegenfläche 62 andererseits sind derart aufeinander abgestimmt, daß das akustische Signal außerhalb der Einsteckkupplung von der Bedienungsperson eindeutig wahrgenommen wird. Die Erzeugung des Signals ist unabhängig von der Einschubgeschwindigkeit, denn auch bei kleinen Einschubgeschwindigkeiten springt das Anschlagelement 52 nach dem vollständigen Passieren der Kante 60 über diese hinweg und schlägt an die Gegenfläche 62 an, welche auf einem größeren Radius liegt als die Kante 60.

Im linken Teil der Zeichnung ist die Position des Mitnahmekörpers 50 und/oder der Hülse im Anlieferungszustand der Steckkupplung zum Anwender dargestellt. In dieser Position ist der Mitnahmekörper 50 mit der Hülse 42 derart verbunden, daß ein unbeabsichtigtes Herauslösen des Mitnahmekörpers 50 verhindert wird. Die Verbindung zwischen Mitnahmekörper 50 und der Hülse 42 ist derart vorgegeben, daß sie beim Einschieben des Rohrendes 3 mit einem vergleichsweise geringen Kraftaufwand gelöst wird und daß nachfolgend der Mitnahmekörper 50 in Richtung des Pfeiles 28 verschoben werden kann.

Zur lösbaren Verbindung der Haube 8 mit dem Muffenkörper 2 enthält die Haube 8 ein Innengewinde 80 und der Muffenkörper 2 ein korrespondierendes Außengewinde 82. Das Außengewinde 82 und ebenso das Innengewinde 80 erstrecken sich jeweils nicht über den gesamten Umfang oder Winkelbereich von 360°, sondern sie sind in Segmente mit Zwischenräumen derart unterteilt, daß die Haube 8 nicht über sämtliche Gewindegänge aufgeschraubt werden muß. Die Segmente und Zwischenräume sind derart ausgebildet, daß die Segmente die Haube durch die Zwischenräume des Muffenkörpers hindurchschiebbar sind und umgekehrt, so daß die Haube praktisch vollständig auf den Muffenkörper aufschiebbar ist und danach lediglich um einen kleinen Winkelbereich gedreht werden muß, damit die Gewindesegmente der Haube die Gewindesegmente des Muffenkörpers hintergreifen. Aufgrund dieser Unterteilung der Gewinde 80 und 82 in Segmente ist eine Schnellverbindung geschaffen, welche mit geringem Zeitaufwand eine funktionssichere Verbindung der Haube 8 auf dem Muffenkörper 2 sicherstellt.

Der Muffenkörper 2 weist in zweckmäßiger Weise einen Anschlag 84 für eine axiale Stirnfläche 86 der Haube 8 auf. Der Anschlag 84 enthält eine Rastnut 88, welche in radialer Richtung verläuft. Die Haube enthält in ihrer axialen Stirnfläche 86 eine korrespondierende Rastnase 90, welche beim Erreichen der vorgegebenen Drehposition bezüglich des Muffenkörpers 2 in die genannte Rastnut 88 eingreift. Außen enthält der Muffenkörper 2 in der Mitte eine ringförmige Ausnehmung 92, deren Boden 94 wenigstens eine Angriffsfläche für ein Werkzeug aufweist und vorzugsweise als Achtkant für einen Gabelschlüssel ausgebildet ist. Mit dem Werkzeug bzw. Gabelschlüssel kann eine Bedienungsperson den Muffenkörper 2 beim Aufschrauben der Haube 8 in einfacher Weise festhalten.

Obgleich die lösbare Verbindung der Haube 8 mit dem Muffenkörper 2 sich als sehr zweckmäßig erwiesen hat, können auch andere Mittel zur Festlegung der Haube 8 auf dem Muffenkörper 2 vorgesehen sein. So können beispielshaft eine nicht lösbare Schweißverbindung oder eine Rastverbindung der Haube 8 auf dem Muffenkörper im Rahmen der Erfindung vorgesehen sein. Ferner erfolgt durch die erläuterte Halteeinrichtung mit Klemmring und Haube keine Einschränkung der Erfindung. Es können auch andere Konstruktionen der Halteeinrichtung zur Verbindung des eingeschobenen Rohrendes 3 mit dem Muffenkörper 2 vorgesehen sein.

Fig. 2 und 3 zeigen den Mitnahmekörper 50 in der mit der Hülse 42 verbundenen Position. Zwischen der Hülse 42 und dem Mitnahmekörper 50 ist wenigstens ein kleiner Steg 66 vorhanden. Die Hülse 42 und der Mitnahmekörper 50 sind vorzugsweise einteilig gemeinsam mit dem wenigstens einen Steg 66 hergestellt. Über den Umfang verteilt sind zweckmäßig drei derartige Stege 66 zwischen der Innenfläche der Hülse 42 und der Außenfläche des Mitnahmekörpers 50 vorgesehen. In Fig. 3 sind die drei Nuten 54 für die gleichfalls drei Anschlagelemente bzw. Zungen 52 gut zu erkennen. Die Stege 66 sind derart dimensioniert, daß sie Einreichen einer vorgebbaren, vergleichsweise kleinen axialen Kraft abreißen und nachfolgend der Mitnahmekörper 50 in der Hülse 42 axial verschiebbar ist. Die Stege 66 sind vorzugsweise nicht im Bereich der Nuten 54 für die Anschlag-elemente bzw. Zungen 52 angeordnet, sondern jeweils im Bereich zwischen den in Umfangsrichtung benachbart angeordneten Nuten.

Ferner sei festgehalten, daß die axialen Nuten 54 sich nur über einen Teil der Gesamtlänge 68 der Hülse 42 erstrecken, welche im Bereich der Gegenfläche 62 über den Umfang vollständig geschlossen ist. An die Längsnut 54 schließt in Richtung zur Gegenfläche 62 die in einem vorgegebenen Winkel 70 geneigt angeordnete Endfläche 58 an, entlang welcher nach dem Abreißen des Mitnahmekörpers 50 beim weiteren Einschieben des Rohrendes das Anschlagelement 52 entlanggleitet, bis es über die Kante 60 hinwegsprengt, radial nach außen ausweicht und hierbei an die Gegenfläche 62 zur Erzeugung des Signals anschlägt.

### Bezugszeichen

- 2: Muffenkörper
- 3, 4: Rohrende
- 5: Mittelebene
- 6: Klemmring
- 8: Befestigungskörper / Haube
- 10: konische Außenfläche von 6
- 12: konische Innenfläche von 8
- 14: Schlitz in 6
- 16: Klemmzahn von 6
- 18: Anschlagkörper
- 20: Längsachse
- 22: Ringraum
- 24: axiale Endfläche von 2
- 26: Stufe / Bund von 8
- 28: Pfeil / Einschubrichtung
- 29: Erweiterung
- 30: Freiraum
- 31: Innendurchmesser von 30
- 32: Dichtkante
- 34: freies Ende von 2
- 36: Muffengrund
- 37: Stirnfläche von 6
- 38: Dichtring / O-Ring
- 39: Innendurchmesser von 38
- 40: Außendurchmesser von 3
- 41: Innendurchmesser von 2
- 42: Hülse / Klickelement
- 43: Stirnfläche von 42
- 44: Ring
- 46: axiale Stirnfläche von 3
- 50: Mitnahmekörper
- 52: Anschlagelement / Zunge
- 54: Nut in 42
- 56: Außenfläche von 52
- 58: Endfläche von 54
- 60: Kante
- 62: Gegenfläche
- 66: Steg
- 68: Länge von 42
- 70: Winkel
- 80: Innengewinde von 8
- 82: Außengewinde von 2
- 84: Anschlag
- 86: axiale Stirnfläche von 8
- 88: Rastnut
- 90: Rastnase
- 92: Ausnehmung
- 94: Boden

## Patentansprüche

1. Steckkupplung für Rohre, enthaltend einen Muffenkörper (2), eine Halteeinrichtung zur Verbindung eines Rohrendes (3, 4) mit dem Muffenkörper (2) und einen zwischen der Innenfläche des Muffenkörpers (2) und dem Rohrende (3, 4) angeordneten Dichtring (38), dadurch gekennzeichnet, daß der Muffenkörper (2) einen Freiraum (30) für den Dichtring (38) aufweist, daß der Dichtring vor dem Einschieben des Rohrendes (3, 4) in Einschubrichtung (28) vor dem Freiraum (30) angeordnet ist und beim Einschieben des Rohrendes (3, 4) in axialer Richtung in den Freiraum (30) verschoben wird, bis er derart entspannt, daß sein Innendurchmesser im wesentlichen gleich groß wie der Außendurchmesser (40) des Rohrendes (3, 4) ist, und daß nach dem Einschieben des Rohrendes (3, 4) der Dichtring (38) einerseits an einer Dichtkante (32) und/oder an einer radialen Erweiterung (29) des Muffenkörpers (2) und andererseits an der Außenfläche des Rohrendes (3, 4) dichtend anliegt.

2. Steckkupplung, insbesondere nach Anspruch 1, dadurch gekennzeichnet, daß vor dem Einschieben des Rohrendes (3, 4) ein Klemmring (6) der Halteeinrichtung mittels des Dichtringes (38) und/oder einer gleichfalls innerhalb des Muffenkörpers (2) angeordneten Hülse (42) in einer vordersten Stellung gehalten wird, wobei der Dichtring (38) und/oder die Hülse (42) unter radialer Vorspannung an der Innenfläche des Muffenkörpers (2) anliegen, und /oder daß ausgehend von einer vorderen Anfangsstellung, beim Einschieben des Rohrendes (3, 4), der Klemmring (6), welcher kraftschlüssig auf der Außenfläche des Rohrendes (3, 4) sitzt, der Dichtring (38) sowie die Hülse (42) axial im Muffenkörper (2) verschiebbar sind.

3. Steckkupplung nach Anspruch 1 oder 2, dadurch gekennzeichnet, daß die vorzugsweise konische Erweiterung (29) axial vom freien Ende (34) des Muffenkörpers (2) beabstandet beginnt und in den Freiraum (30) mündet und/oder daß an den Freiraum (30) in Richtung zum freien Ende (34) des Muffenkörpers (2) die Dichtkante (32) für den Dichtring (38) anschließt und/oder daß die Dichtkante (32) axial zwischen der Erweiterung (29) und dem Freiraum (30) vorgesehen ist.

4. Steckkupplung nach einem der Ansprüche 1 bis 3, dadurch gekennzeichnet, daß der Dichtring (38) zunächst in einer vorderen Ausgangsstellung zwischen dem freien Ende (34) des Muffenkörpers (2) und dem Freiraum (30) angeordnet ist und beim Einschieben des Rohrendes (3, 4) axial in Einschubrichtung (28) axial in den Freiraum (30) verschiebbar ist und hierbei radial sich erweitert und entspannt und/oder daß der Innendurchmesser (31) des Freiraumes (30) im wesentlichen gleich groß ist wie der Außendurchmesser des Dichtringes (38) in dessen zumindest näherungsweise entspanntem Zustand.

5. Steckkupplung nach einem der Ansprüche 1 bis 4, dadurch gekennzeichnet, daß der Dichtring (38) axial zwischen dem Klemmring (6) und der Hülse (42) angeordnet ist, daß der Klemmring (6) einen Anschlagkörper (18) zur Begrenzung der axialen Bewegung des Klemmringes (6) beim Einschieben des Rohrendes derart aufweist, daß bei Erreichen der axialen Endstellung des Klemmringes (6) sich der Dichtring (38) zumindest näherungsweise am Beginn der Erweiterung (29) und/oder zumindest teilweise im Freiraum (30) befindet, und/oder daß der Anschlagkörper (18) in einem Ringraum (22) axial bewegbar ist, wobei der Ringraum (22) vorzugsweise zwischen der aixalen Endfläche (24) des Muffenkörper (2) und einem Bund oder einer Stufe (26) im Inneren der Haube (8) angeordnet ist.

6. Steckkupplung, insbesondere nach einem der Ansprüche 1 bis 5, dadurch gekennzeichnet, daß im Muffenkörper (2) ein vom Rohrende (3, 4) axial verschiebbarer Mitnahmekörper (50) mit einem Anschlagelement (52) angeordnet ist, welches beim Erreichen einer vorgegebenen Einschubtiefe des Rohrendes (3, 4) an einer Gegenfläche (62) zur Erzeugung eines akustischen Signals und/oder eines Schwingungssignals anschlägt, und/oder daß das Anschlagelement (52) als eine federelastische Zunge ausgebildet ist, und/oder daß das Anschlagelement (52) beim Erreichen einer vorgegebenen Einschubtiefe des Rohrendes (3, 4) über die Kante (60) springt und an einer Gegenfläche (62) unter Erzeugung eines akustischen Signals und/oder eines Schwingungssignals anschlägt und daß der axial verschiebbare Mitnahmekörper (50) unabhängig von der Halteeinrichtung ausgebildet ist.

7. Steckkupplung nach einem der Ansprüche 1 bis 6, dadurch gekennzeichnet, daß das Anschlagelement (52) einer Nut (54) zugeordnet ist und beim Verschieben mittels des Rohrendes (3, 4) über eine vorzugsweise geneigt angeordnete und die Kante (60) enthaltende Endfläche (58) der Nut (54) bewegbar ist und/oder daß der Mitnahmekörper (50) und/oder das Anschlagelement (52) innerhalb der Hülse (42) angeordnet sind.

8. Steckkupplung nach einem der Ansprüche 1 bis 7, dadurch gekennzeichnet, daß der Mitnahmekörper (50) zunächst über wenigstens einen Steg (66) innerhalb des Muffenkörpers (2) festgelegt ist und / oder daß über den Umfang verteilt eine vorgebbare Anzahl derartiger Stege (66) vorhanden ist und/oder daß die Hülse (42) den Steg (66) zur Festlegung des Mitnahmekörpers (50) aufweist und/oder daß der Steg (66), der Mitnahmekörper (50) und die Hülse (42) einteilig hergestellt sind.

9. Steckkupplung, insbesondere nach einem der Ansprüche 1 bis 8, dadurch gekennzeichnet, daß die Hülse (42) und/oder ein Klemmring (6) für das Rohrende (3, 4) und/oder der Dichtring (38) innerhalb des Muffenkörpers (2) in einer gemeinsamen Ausnehmung desselben angeordnet sind und mittels des Befestigungskörpers (8) im Muffenkörper (2) festgelegt sind und/oder daß der Befestigungskörper (8), welcher vorzugsweise als eine Haube ausgebildet ist, ein Innengewinde (80) und der Muffenkörper (2) ein korrespondierendes Außengewinde (82) für eine lösbare Schraubverbindung aufweist.

10. Steckkupplung nach einem der Ansprüche 1 bis 9, dadurch gekennzeichnet, daß das Außengewinde (82) des Muffenkörpers in Gewindesegmente (114) mit dazwischenliegenden Zwischenräumen (116) unterteilt ist, daß auch das Innengewinde des Befestigungskörpers (8) entsprechend in Gewindesegmente und Zwischenräume unterteilt ist und daß der Befestigungskörper (8) axial derart auf den Muffenkörper (2) aufschiebbar ist, daß die Gewindesegmente (114) in die Zwischenräume des Befestigungskörpers (8) eingreifen und umgekehrt, wobei nachfolgend durch Drehung des Befestigungskörpers (8) entsprechend der Größe der Gewindesegmente diese miteinander in Eingriff bringbar sind.

11. Steckkupplung nach einem der Ansprüche 1 bis 10, dadurch gekennzeichnet, daß der Befestigungskörper (8) wenigstens eine Rastnase (90) aufweist, welche nach dem Aufschrauben des Befestigungskörpers (8) auf den Muffenkörper (2) in eine zugeordnete Rastnut (88) des Muffenkörpers (2) eingreift.

12. Steckkupplung nach einem der Ansprüche 1 bis 11, dadurch gekennzeichnet, daß der Klemmring (6) einen Anschlagkörper (18) zur Begrenzung der axialen Bewegung des Klemmrings (6) beim Einschieben eines Rohrendes (3, 4) aufweist und / oder daß durch Begrenzung der axialen Bewegung des Klemmrings (6) beim Einschieben des Rohrendes (3, 4) eine Erhöhung der Anpresskraft eines Dichtringes (38) und / oder eine Erhöhung des Einschubwiderstandes zumindest näherungsweise vermieden wird.
